# EUROPEAN PATENT SPECIFICATION

(11) **EP 3 575 144 B1**
(45) Date of publication and mention of the grant of the patent: **20.10.2021**
(21) Application number: 18174781.7
(22) Date of filing: 29.05.2018
(51) Int. Cl.: B60N 2/66, B60N 2/90, B60N 2/02, A47C 7/46

(54) **DYNAMIC PNEUMATIC SUPPORT SYSTEM**
DYNAMISCHES PNEUMATISCHES STÜTZSYSTEM
SYSTÈME DE SUPPORT PNEUMATIQUE DYNAMIQUE

(43) Date of publication of application: 04.12.2019
(73) Proprietor: FICO CABLES LDA, 4470-263 Vermoim-Maia (PT)
(72) Inventor: DE CASTRO FARIA, Manuel António, 4470-263 Vermoim- Maia (PT); DA SILVA LOPES, Pedro João, 4470-263 Vermoim - Maia (PT); GONCALVES SILVA, David Manuel, 4470-263 Vermoim- Maia (PT)
(74) Representative: Mader, Joachim

(56) References cited:
- WO-A2-00/03628
- DE-A1- 19 938 698
- US-A- 5 707 109
- US-A1- 2017 349 061

## Description

### 1. Technical field

The present invention relates to a dynamic pneumatic support system for integration into a back rest of a vehicle seat. The invention further relates to a method of self-adjusting such a dynamic pneumatic support system as well as to a vehicle seat comprising such a dynamic pneumatic support system.

### 2. Prior art

Vehicle seats are in general well cushioned seats to provide a pleasant seating experience during travel. A thick cushioning, however, increases the weight of the seat and thus of the vehicle which, in turn, demands a stronger engine and increases fuel consumption of the vehicle.

US-A-5707109 discloses a vehicle seat comprising adjustors which are activated in response to predetermined level of acceleration forces experienced by the seat.

In order to obtain sufficient cushioning properties while at the same time reducing the weight of a vehicle seat and to provide adaptability of the seat to the passenger, inflatable support elements were integrated into vehicle seats of the prior art. The softness and flexibility of these support elements provided good cushioning properties. Thus, they were used as additional cushioning elements above or below a smaller common cushioning.

Furthermore, due to their ability to change their shape by inflating or deflating, the support elements were used to provide a passenger-adjusted cushioning. Thereby, the seating comfort of a passenger's seat was further improved.

Document DE 10 2010 020 642 A1 describes a vehicle seat, in particular an aircraft passenger seat, comprising an inflatable air cushion and an inclination sensor of the back rest, wherein the pressure of the air cushion is controlled with respect to the inclination of the back rest.

Document DE 10 2006 004 071 A1 describes a pneumatic device for a seat, in particular an aircraft passenger seat, comprising at least a second computational unit for redundancy to ensure a high comfort in particular on long-distant flights.

Document US 9,327,625 B2 describes a vehicle seat including a seat back that is variable in shape and a control device, wherein the control device controls an introduction and discharge of air into and from each air bag based on a state of change in the air in each air bag that occurs, when the seat occupant sits, to change the shape of the seat back to a shape that conforms to the seat occupant's unique sitting position.

Document US 8,616,654 B2 describes a method and a device for adjusting a seat, wherein the method includes the acts of detecting a pressure exerted by a user on the seat via a pneumatic sensor and/or hydraulic sensor. Thereby, a first lifting element adjusts the seat based on the pressure exerted by the user.

A passenger-adjusted cushioning, however, may lose its benefits or even become uncomfortable when stronger motion forces occur that force a passenger into unusual or unwanted seating positions. An uncomfortable seating position, though, may for example distract a driver and reduce his or her attention to the driving or to the actual road traffic.

It is the problem of the present invention to provide a pneumatic support system, a method for self-adjusting such a pneumatic support system and a vehicle seat comprising such a pneumatic support system that complies with the above-mentioned requirements and constraints.

### 3. Summary of the invention

The problem is solved by a dynamic pneumatic support system according to claim 1, a dynamic pneumatic support system according to claim 9, a method of self-adjusting a dynamic pneumatic support system according to claim 12 and a vehicle seat according to claim 15.

Particularly, the problem is solved by a dynamic pneumatic support system for integration into a back rest of a vehicle seat, the dynamic pneumatic support system comprising at least one lumbar support bladder, arranged at the lumbar region of a back rest, at least one dorsal support bladder, arranged at least at a shoulder region of the back rest, a pump unit for supplying the lumbar support bladder and the dorsal support bladder individually with air, an electronic control unit for controlling the pump unit, and a sensor unit connected to the electronic control unit for automatically measuring orientation and/or acceleration of the back rest and providing orientation and/or acceleration data to the electronic control unit, wherein the electronic control unit can, based on the orientation and/or acceleration data, control the pump unit, for automatically and individually controlling the pressure of at least the lumbar support bladder and dorsal support bladder.

The dynamic pneumatic support system of the present invention is in particularly advantageous when the passenger tilts the backrest of the seat from a driving position into a relaxing position. The dynamic pneumatic support system maintains the users comfort experience in any inclination of the backrest of the seat. Further dynamic pneumatic support system is particularly advantageous when integrated into a vehicle seat, during a tilted, i.e. inclined, motion and/or a curved motion of the vehicle. During such a motion a passenger or driver, respectively, of the vehicle is exposed to gravitational or centrifugal forces which will force the passenger away from its original and comfortable seating position to an unwanted and often uncomfortable position. The present dynamic pneumatic support system, however, will provide additional support to the passenger in such situations in that the cushioning, i.e. the air pressure and thus the volume of the inflatable cushioning elements and bladders, respectively, is increased/decreased in the stressed regions of the seat. Preferably, in case of an uphill motion of the vehicle a more comfortable seating position is achieved when the passenger is supported towards its original, upright sitting, position. Therefore, the cushioning in the dorsal region is intensified.

When the pressure of the bladders is controlled, the pump unit may pump air into the respective bladder or may release air out of the respective bladder. This increases the pressure within the bladder or decreases the pressure within the bladder and, thus, also changes the shape and/or stroke of the respective bladder.

Due to the automatic measuring of orientation and/or acceleration, a timely or even real-time adjustment of the bladders, i.e. the cushioning, can be performed which increases the usability and passenger's comfort. Furthermore, a passenger is not disturbed by any manual adjustment procedure, as the adjustment is automatically controlled by the electronic control unit.

The lumbar and dorsal support bladders each cushion the respective zone of the human body of a passenger. Thereby, comfort for the passenger is increased if the vehicle tilts around a transversal axis. Preferably, only one pump unit is necessary to inflate or deflate all bladders used. This saves valuable space in the interior of a vehicle and reduces the complexity of the system.

Preferably, the electronic control unit dynamically controls the pressure of the at least one lumbar support bladder and of the at least one dorsal support bladder, in a way that when the inclination of the back rest with respect to a vertical direction increases, e.g. when moving the back rest from a driving position to a relaxing position, the pressure of the lumbar support bladder decreases to a predetermined lumbar inclination pressure value or is maintained at a manually set pressure below this predetermined lumbar inclination pressure value, and / or the pressure of the dorsal support bladder increases to a predetermined dorsal inclination pressure value or is maintained at a manually set pressure above this predetermined dorsal inclination pressure value. This automatic adjustment of the lumbar and dorsal support bladders increases the comfort of the seat in relaxing position, in which the back rest is more inclined. Further, the manually set comfort pressures of the passengers are taken into consideration. No pressure change is performed, if the manually set pressure of the lumbar bladder is already below the predetermined lumbar inclination pressure value and if the manually set pressure of the dorsal bladder is already above the predetermined dorsal inclination pressure value.

Preferably, the electronic control unit dynamically controls the pressure of the at least one lumbar support bladder and of the at least one dorsal support bladder, in a way that when the inclination of the back rest with respect to a vertical direction decreases, e.g. when moving the back rest from a relaxing position to a driving position, the pressure of the lumbar support bladder increases to a stored manually set pressure above a predetermined lumbar inclination pressure value or is maintained at a manually set pressure below this predetermined lumbar inclination pressure value, and / or the pressure of the dorsal support bladder decreases to a stored manually set pressure above a predetermined dorsal inclination pressure value or is maintained at a manually set pressure above this predetermined dorsal inclination pressure value. This automatic adjustment of the lumbar and dorsal support bladders increases the comfort of the seat in driving position, in which the back rest is less inclined. Preferably, the comfort of the seat is restored as it was in driving position before the passenger chose the relaxing position of the seat. Thus, the electronic control unit provides the original manually set pressure values of the lumbar and dorsal support bladders.

Preferably, the electronic control unit is programmed such that, when the inclination angle of the backrest increases, the predetermined lumbar inclination pressure value decreases, and / or the predetermined dorsal inclination pressure value increases. This leads to an automatic and dynamic control of the pressures in the lumbar and dorsal bladders for each inclination of the back rest between driving position and fully inclined relaxing position. The pressures of the lumbar and dorsal bladders are continuously adapted to the present inclination of the back rest. The more the back rest is inclined, the more the predetermined lumbar inclination pressure value decreases and the more the predetermined dorsal inclination pressure value increases.

Preferably, the predetermined lumbar inclination pressure value is about 40% to 85% of the manually set pressure value, preferably, the predetermined lumbar inclination pressure value is about 65% to 85% of the manually set pressure value at an back rest inclination angle of about 45°, and further preferably the predetermined lumbar inclination pressure value is about 40% to 60% of the manually set pressure value at an back rest inclination angle of about 70°. Such pressure values of the lumbar support bladder provide an optimized comfort of the seat in differently inclined positions.

Preferably, the predetermined dorsal inclination pressure value is about 50% to 75% of the maximum dorsal pressure value, preferably, the predetermined dorsal inclination pressure value is about 50% of the maximum dorsal pressure value at an back rest inclination angle of about 45°, and further preferably the predetermined dorsal inclination pressure value is about 75% of the maximum dorsal pressure value at an back rest inclination angle of about 70°. Such pressure values of the dorsal support bladder provide an optimized comfort of the seat in differently inclined positions.

Preferably, the dynamic pneumatic support system comprises two or three lumbar support bladders, the pressures of which are individually controlled by the electronic control unit. By two or three lumbar support bladders, which are preferably arranged at different height levels at the backrest the overall shape and particularly overall height position of the lumbar support can be adjusted to the passenger's needs and size. By individually controlling the pressure in each of the lumbar support bladders the overall shape and experienced height of the lumbar support can be easily adapted without having any mechanical elements for shifting the lumbar support bladders. For example, if the highest arranged lumbar support bladder has a higher pressure than the lower arranged bladders the apex of the overall lumbar support will be at a high height level at the backrest. If the lowest arranged lumbar support bladder has a higher pressure than the higher arranged lumbar support bladders the apex of the overall lumbar support will be at a low height level at the backrest.

Preferably, the dynamic pneumatic support system further comprises at least one right side support bladder, arranged at the right side of the back rest, and at least one left side support bladder, arranged at the left side the back rest, wherein the left and right side support bladders are individually in fluid connection with the pump unit, for supplying the right side support bladder and the left side support bladder individually with air, and the electronic control unit can, based on the orientation and/or acceleration data, control the pump unit, for automatically and individually controlling the pressure of at least the right side support bladder and the left side support bladder. Thereby, the left and right side support bladders can provide an adequate counter force to the above-mentioned gravitational and/or centrifugal forces in order to keep the passenger in its original comfortable position.

The above-mentioned problem is also solved by a dynamic pneumatic support system for integration into a back rest of a vehicle seat, the dynamic pneumatic support system comprising at least one right side support bladder, arranged at the right side of a back rest and at least one left side support bladder, arranged at the left side of the back rest, the left and right side support bladders are individually in fluid connection with a pump unit, for supplying the right side support bladder and the left side support bladder individually with air, an electronic control unit for controlling the pump unit, a sensor unit connected to the electronic control unit for automatically measuring orientation of the dynamic pneumatic support system and/or acceleration and providing orientation and/or acceleration data to the electronic control unit, wherein the electronic control unit can, based on the orientation and/or acceleration data, control the pump unit, for automatically and individually controlling the pressure of at least the right side support bladder and the left side support bladder.

Preferably, the electronic control unit comprises two adjustment modes, wherein in a first manual adjustment mode the pressure of the bladders can be manually adjusted by the user, and wherein in a second automatic adjustment mode the pressure of the bladders is automatically adjusted by the electronic control unit. In the manual adjustment mode the user can adjust the back rest shape to his personal comfort requirements. In the automatic adjustment mode the dynamic pneumatic support system automatically maintains the comfort appearance for the user under different driving conditions and when the backrest inclination is changed.

Preferably, the electronic control unit based on the measured orientation data and/or acceleration data, controls the pump unit for automatically controlling the pressure of the bladders for counteracting the acceleration and/or the gravity. In the automatic adjustment mode the pressure in the bladders is controlled according the acceleration, preferably lateral acceleration when driving a curve, and / or gravity when driving a slope or when the backrest inclination is changed.

Preferably, the sensor unit comprises a 3-axis sensor and/or an acceleration sensor or wherein the electronic control unit can receive acceleration data from external sources instead of the acceleration sensor.

The above mentioned problem is also solved by a method of self-adjusting a dynamic pneumatic support system for integration into a back rest of a vehicle seat, the method comprising the following steps:
a. Providing at least one lumbar support bladder, arranged at the lumbar region of the back rest, at least one dorsal support bladder, arranged at least at the shoulder region back rest and a pump unit for supplying the lumbar support bladder and the dorsal support bladder individually with air;
b. Measuring orientation data of the back rest and/or acceleration data by means of a sensor unit and providing said orientation and/or acceleration data to an electronic control unit;
c. Automatically controlling the pump unit by the electronic control unit based on the orientation data and/or acceleration data; and
d. Automatically controlling the pressure of the at least one lumbar support bladder and the at least one dorsal support bladder by the pump unit according to the measured orientation and/or acceleration data.

By this method the above mentioned advantages are achieved as well. Particularly, the advantage that the dynamic pneumatic support system maintains the users comfort experience in any inclination of the backrest of the seat and during a tilted, i.e. inclined, motion and/or a curved motion of the vehicle.

Preferably, the method of self-adjusting a dynamic pneumatic support system, further comprising the following steps:
a. Providing at least one right side support bladder, arranged at the right side of the back rest and at least one left side support bladder, arranged at the left side of the back rest, wherein the left and right side support bladders are individually in fluid connection with the pump unit, for supplying the right side support bladder and the left side support bladder individually with air; and
b. Automatically controlling the pressure of the at least one right side support bladder and the at least one left side support bladder by the pump unit according to the measured orientation and/or acceleration data.

These method steps ensure that particularly centrifugal forces onto the driver are counteracted, when driving a curve.

Preferably, the automatic controlling step comprises the steps of increasing the pressure in one of the bladders and at the same time decreasing the pressure of the corresponding other bladder. The automatic adjustment of the bladders can be done by inflating of air into the respective bladder, i.e. a pressure increase, or by deflating of air, i.e. a pressure decrease. Preferably, corresponding bladders, i.e. the right side support bladder and the left side support bladder can be adjusted in different directions. In one bladder, for example the bladder facing to the outside of a curve, the pressure is increased and simultaneously in the corresponding other bladder, for example the bladder facing to the inside of a curve, the pressure is decreased.

Preferably, the higher the inclination angle of the backrest and/or acceleration is, the higher the automatic inflation of at least one of the bladders will be. Thus, a higher gravitational and/or acceleration force applied by the passenger sitting in the vehicle seat is compensated by higher pressures or higher pressure decreases, respectively. compared to the opposing or other bladder, respectively, by the pump unit, while at least one of the opposing or other bladder, respectively, can be automatically deflated stronger by the pump unit at the same time.

Thus, the cushioning can be adapted according to the actual strength of the occurring gravitational and/or acceleration forces. Stronger occurring forces require an increased cushioning pressure in order to provide an adequate support of the passenger in the seat. This is achieved with the present dynamic pneumatic support system.

Preferably, the method further comprises the step of switching the electronic control unit into a first manual adjustment mode and manually adjusting an initial pressure within at least one of the bladders of the dynamic pneumatic support system. Thereby, the cushioning of the vehicle seat and regions of this seat, respectively, can be manually adjusted according to comfort preferences of the passenger sitting in this seat.

Preferably, the method further comprises the step of switching the electronic control unit from a first manual adjustment mode to a second automatic adjustment mode, wherein the electronic control unit automatically controls the self-adjustment of the dynamic pneumatic support system. The switching from the first manual mode to the second automatic mode by the passenger enables the passenger to determine when the manual adjustment is possible and when the automatic adjustment is operational. Furthermore, a passenger-initiated switching back from the second automatic adjustment mode to the first manual adjustment mode is possible, wherein the passenger can manually re-adjust the cushioning of its seat if necessary.

The above mentioned problems are also solved by a vehicle seat comprising a back rest and a dynamic pneumatic support system, as defined above, integrated into the back rest.

Such a vehicle seat has the advantage to increase a passenger's comfort during an inclined motion and/or a curved motion of the car. During such a motion a passenger can be moved sideways to the downward side of the inclination and/or further into the direction of the acceleration. The active vehicle seat of the present invention, however, supports the passenger in these situations. Moreover, the vehicle seat of the present invention adjusts the rate of cushioning and automatically increases the cushioning on the stressed side of the vehicle seat to increase the comfort of the passenger during the above-mentioned motions.

### 4. Brief description of the drawings

In the following, preferred embodiments of the invention are disclosed by reference to the accompanying figures, in which shows:
- Fig. 1: a schematic partially sectional frontal view of an embodiment of a vehicle seat with an embodiment of the dynamic pneumatic support;
- Fig. 2: schematic illustration of a user operating a control panel for setting an electronic control unit into a first manual and second automatic adjustment mode;
- Figs. 3a ― 3b: a schematic partially sectional view from below of an embodiment of a back rest of the vehicle seat with an integrated embodiment of a dynamic pneumatic support system with equally inflated side support bladders (Fig. 3a) and differently inflated side support bladders (Fig. 3b) during a curved motion of a car;
- Fig. 3c: schematic illustration of the curved motion of the car in a top view with regard to Figs. 3a and 3b;
- Fig. 4a: a schematic partially sectional view from the side of an embodiment of the vehicle seat with an integrated embodiment of the dynamic pneumatic support system comprising a lumbar support with three bladders and a dorsal support with one bladder during an uphill motion of a car;
- Fig. 4b: schematic illustration of the uphill motion of the car in a side view with regard to Fig. 4a;
- Figs. 5a ― 5c: a schematic illustration in a side view of an embodiment of the vehicle seat with an embodiment of the integrated dynamic pneumatic support system with the back rest in a first position (Fig. 5a), a second position (Fig. 5b) and a third position (Fig. 5c); and
- Fig. 6: a schematic illustration from the front of an embodiment of the dynamic pneumatic support system mounted on a mounting board.

### 5. Detailed description of exemplary embodiments

In the following, preferred embodiments of the invention are described in detail with respect to the figures.

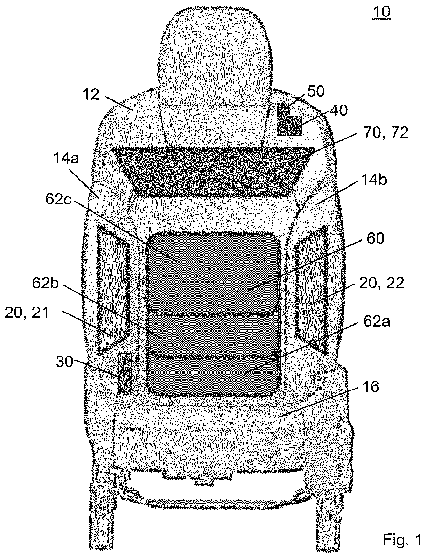

Figure 1 shows an embodiment of a vehicle seat 10 in a frontal view. The vehicle seat 10 essentially comprises a back rest 12 and a seating area 16 onto which a passenger is seated. The back rest 12 supports a seated passenger to the back such that he or she can lean against it. The vehicle seat 10 is mounted to a floor of the vehicle (not shown) in the installed state by any known mounting techniques like for example by screwing.

The back rest 12 and the seating area 16 are made of two separate elements that are connected by common connection means to form the complete vehicle seat 10. The back rest 12 can be inclined with respect to the seating area 16 at their connection point. Such an inclination of the back rest 12 allows an adjustment of the seat 10 to the passenger and allows a comfortable seating position. Manual adjustment devices can be arranged directly at the vehicle seat 10 for setting the inclination of the back rest 12. Further, the back rest 12 inclination can be set by electrical actuators (not shown).

The vehicle seat 10 comprises a metallic base structure of the seat 10, a variable cushioning above the base structure comprising inflatable cushioning elements, like bladders 21, 22, 62, 72, as well as common cushioning elements, like cold cured foam elements, and a coating based on a fabric material and/or synthetic leather and/or leather on top. The back rest 12 comprises two lateral sides 14a, 14b at which protrusions of the cushioning of the back rest 12 are formed in the direction of the passenger for a side support of the passengers.

The embodiment of a dynamic pneumatic support system 1 of Fig. 1 essentially comprises a side support 20, a lumbar support 60 and a dorsal support 70. Each of the supports 20, 60, 70 comprises a certain number of bladders 21, 22, 62, 72. In the shown embodiment the side support 20 comprises a right side support bladders 21, a left side support bladder 22, each being arranged in the respective protrusion on the lateral sides 14a, 14b of the back rest 12. The dorsal support 70 comprises one dorsal support bladder 72. The lumbar support 60 comprises three separate lumbar support bladders 62a, 62b and 62c which allows adjusting the shape of the back rest 12 in the lumbar area in more defined matter. Particularly, the three lumbar support bladders 62a, 62b and 62c allow to adjust the height of the overall lumbar support 60 in the back rest 12. This provides an improved comfort experience for the passenger. Although in Fig. 1 an embodiment with six bladders is shown it is possible to provide the number of bladders 22, 21, 62, 72 as desired.

The bladders 21, 22, 62, 72 are basically inflatable bags made of a flexible material like soft plastic foil, rubber or the like. In general, the bladders 21, 22, 62, 72 are arranged between the base structure or a suspension mat of the seat 10 and the foam elements, at the so-called foam B-surface level. However, the bladders 21, 22, 62, 72 can also be arranged at the so-called A-surface level, i.e. between the foam elements and a seat trimming. The bladders 21, 22, 62, 72 affect the shape of the vehicle seat 10 when being inflated and/or deflated.

A pump unit 30 is arranged at the vehicle seat or nearby in order to provide pressurized air to the bladders 21, 22, 62, 72. Thereby, the volume of air fed into each bladder can be controlled by an electronic control unit 40. The electronic control unit 40 can be arranged at the vehicle seat 10 and can provide a control panel 80 elsewhere in the car, preferably at the main board of the car. However, in other embodiments the one or more control panels 80 can be arranged for example at each vehicle seat 10.

When inflated, the bladders 21, 22, 62, 72 comprise an increased pressure and air volume and are then enlarged. Furthermore, their surface will become harder with increased air pressed into a bladder 21, 22, 62, 72. Thereby, also the pressure within the bladder 21, 22, 62, 72 increases. In such a case, as a result, for example the side support 20 provides a stronger support against stronger occurring gravitational and/or centrifugal, i.e. acceleration, forces A. When air is left from the bladders 21, 22, 62, 72 such that they deflate, their volume and pressure decreases and they become softer. Thus, also the cushioning in the corresponding region of the vehicle seat 10 becomes softer.

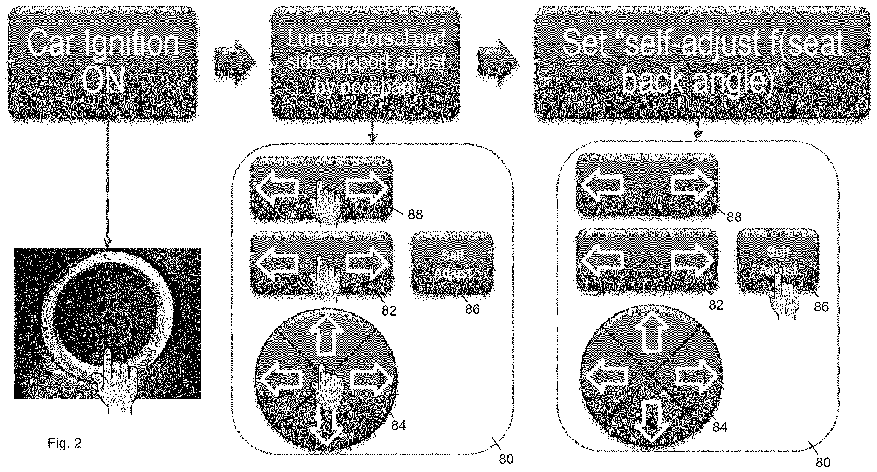

Fig. 2 shows an embodiment of a control panel 80 as well as the corresponding operating sequence for a passenger. Thereby, after initializing the engine, the electronic control unit 40 is in the first manual adjustment mode and a passenger can manually adjust the cushioning of his seat 10 by activating the corresponding buttons 82, 84, 88 on the control panel 80. The 2-way button 88 adjusts the bladders 21 and 22 of the side support. The 4-way button 84 adjusts the bladders 62a, 62b and 62c of the lumbar support in their overall height and inflation. Further, another 2-way button 82 is provided for manually adjusting the dorsal support bladder 72.

When the passenger has finished the manual adjustment, he may activate the "self-adjust" button 86 on the control panel 80 to switch the electronic control unit 40 into the second automatic adjustment mode in which the bladders 21, 22, 62, 72 are automatically self-adjusted.

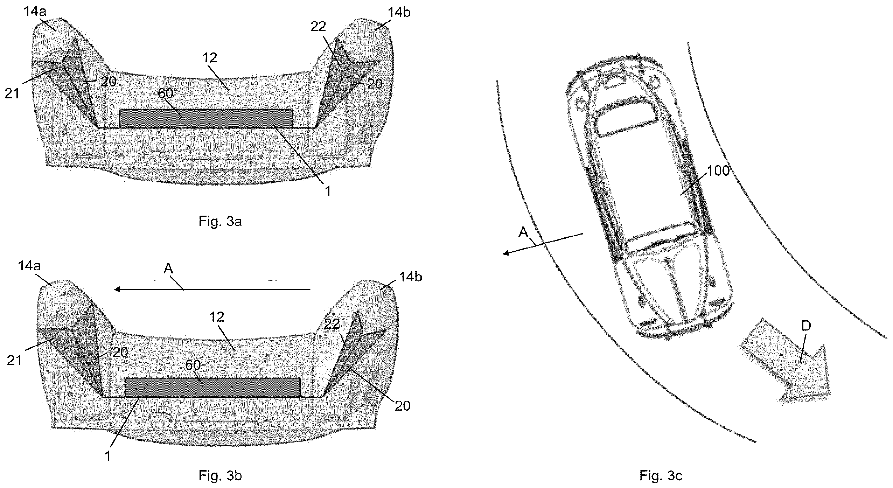

With regard to Figs. 3a ― 3c an operation scenario of the side support 20 is shown. At the beginning, as shown in Fig. 3a the side support 20 of the dynamic pneumatic support system 1 comprises equally inflated bladders 21, 22 on each lateral side 14a, 14b of the back rest 12. This constitutes the normal state without any particular gravitational and/or acceleration forces.

If a car 100 is moving in a direction D into a curve, as shown in Fig. 3c, it performs a curved motion and centrifugal forces are exerted to the car and its interior. Particularly, a centrifugal acceleration A occurs radially to the outside of the curve and acts on a passenger of the car 100. As a result, the passenger is forced to the right side of the vehicle seat 10 (seen from a sitting perspective of a passenger), in Fig. 3c in the direction of the centrifugal acceleration arrow A.

In case an acceleration force A occurs, as with the car 100 of Fig. 3c, the dynamic pneumatic support system 1 controls the bladders 21, 22 of the side support 20 such that bladder 21 on the right lateral side 14a of the back rest 12 is inflated while bladder 22 on the left lateral side 14b of the back rest 12 may be deflated preferably simultaneously, as illustrated in Fig. 3b. Thereby, the more stressed region on the right lateral side 14a of the back rest 12, to which the passenger is pressed, is more and harder cushioned than the opposing left lateral side 14b of the back rest 12 in order to keep the passenger in its original comfortable seating position at the center of the vehicle seat 10. The deflation of bladder 22 is not always required in this case but may provide a desired softer cushioning on this opposing side. The same applies vice versa when the car 100 performs a curved motion in the opposite direction.

When the acceleration decreases again, e.g. after passing the curve, air is released from bladder 21 while air can be inflated into bladder 22, if it was released during the centrifugal acceleration, in order to restore the original pressures of the side support bladders 21, 22.

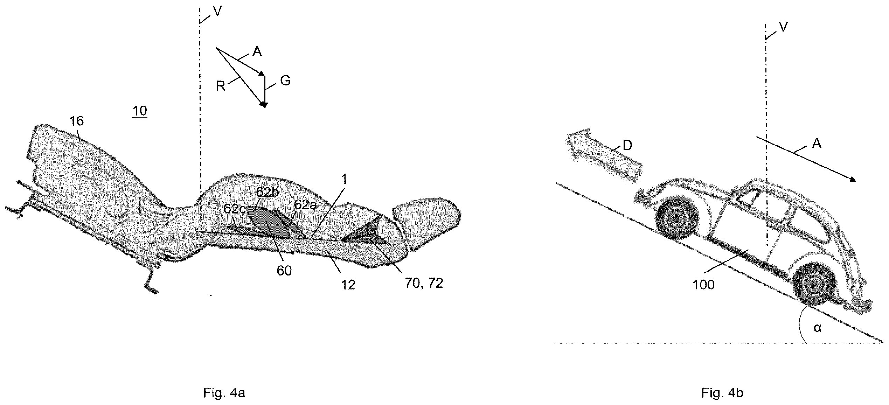

Fig. 4b shows an uphill motion of the car 100. In this situation, additional gravitational G and acceleration forces A forming a resulting force R are exerted on the car 100 and its passengers. The same effect with respect to said gravitational force is achieved when the inclination angle α is increased with respect to a vertical direction V by an adjustment of the back rest 12 while the car 100 is in normal, i.e. horizontal orientation.

In summary, the absolute inclination angle α with respect to gravity is of relevance. In one exemplary case the lumbar and dorsal support 60, 70 of the dynamic pneumatic support system 1 support a passenger seated in vehicle seat 10 as illustrated in Fig. 4a. Thereby, as an example, the back rest 12 is inclined, e.g. the back rest is in a relaxing position, and additionally the car is inclined with respect to gravity as illustrated in Fig. 4b. Thus, the total inclination angle α is determined by the support system 1 and the bladders 62, 72 are inflated/deflated accordingly. Because of the inclined, backwards, downhill force R a stronger cushioning of the shoulder, i.e. dorsal region, of the passenger is desired while a softer cushioning at the lumbar region may be desired preferably simultaneously.

Thus, in operation, when the electronic control unit 40 of the dynamic pneumatic support system 1 receives corresponding measurement data of the orientation of the dynamic pneumatic support system 1 and/or acceleration from the sensor unit 50 or from an external sensor, it will control the pump unit 30 to inflate bladder 72 of the dorsal support 70 and to deflate at least one of bladders 62a,b,c of the lumbar support 60 in order to provide the desired comfortable support of the back rest 12 to the passenger. The adjustment of the side support 20 may maintain unchanged.

If the car 100 is subsequently moving on a horizontal road again, the initial manually set pressures of the dorsal support bladder 72 and the lumbar support bladders 72 are restored by the control unit 40 and the pump unit 30. For an exact adjustment, the pump unit 30 may have separate pressure sensors for each connected bladder 21, 22, 62, 63.

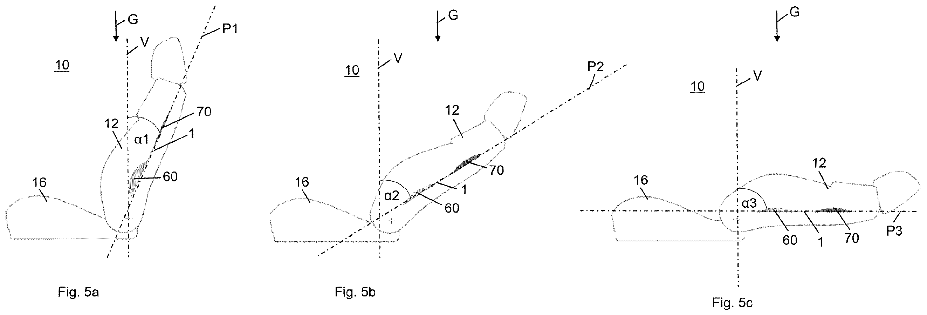

The same control scheme as described above is performed by the dynamic pneumatic support system 1 in case the back rest 12 is inclined from a driving position to a relaxing position as can be seen in Figs. 5a, 5b and 5c. In the driving position P1 of Fig. 5a, the backrest 12 may have a backrest angle α1 of about 25° with respect to a vertical direction V. The pressures of the lumbar support bladder 62, the dorsal support bladder 72 and the side support bladders 21, 22 have been adjusted by the user. Thereby, the lumbar support bladder 62 and the dorsal support bladder 72 may have a user defined pressure of P'.

If the backrest is inclined to a relaxing position P2 with a backrest angle α2 of about 45° with respect to a vertical direction V as shown in Fig. 5b, the dynamic pneumatic support system 1 in the "self adjust" mode automatically decreases the pressure of the lumbar support bladder 62 to 65% to a predetermined lumbar inclination pressure value of preferably 85% of P'. Simultaneously, the pressure of the dorsal support bladder 72 is increased up to a predetermined dorsal inclination pressure value of preferably 50% of the maximum allowable pressure Pmax. If the user already had set the pressure of the dorsal support 72 above 50% Pmax, then preferably this pressure is maintained and no further adjustment is made.

If the backrest is further inclined to a relaxing position P3 with a backrest angle α3 of about 70° to 90° with respect to a vertical direction V as shown in Fig. 5c, the dynamic pneumatic support system 1 in the "self adjust" mode automatically decreases the pressure of the lumbar support bladder 62 to a predetermined lumbar inclination pressure value of preferably 40% to 65% of P'. Simultaneously, the pressure of the dorsal support bladder 72 is increased up to a predetermined dorsal inclination pressure value of preferably 75% of the maximum allowable pressure Pmax. If the user already had set the pressure of the dorsal support 72 above 75% Pmax, then preferably this pressure is maintained and no further adjustment is made. In performing a relative adjustment of the pressure of the bladders 62, 72 the original comfortable seating position can be maintained.

In one embodiment a pressure map is stored in a memory of the electronic control unit 40 containing values of the manual adjustment of the bladders 62, 72 and certain predetermined lumbar and dorsal inclination pressure value, i.e. percentages, for different inclination, orientation and/or acceleration values in order to specifically adapt the seat to all possible driving and manual adjustment conditions.

In this regard, the relative adjustment values, i.e. percentage values of the initial adjustment values, maybe furthermore adapted or set by the manufacturer to each vehicle seat 10 class according to empirical values, vehicle seat design and/or bladder shape.

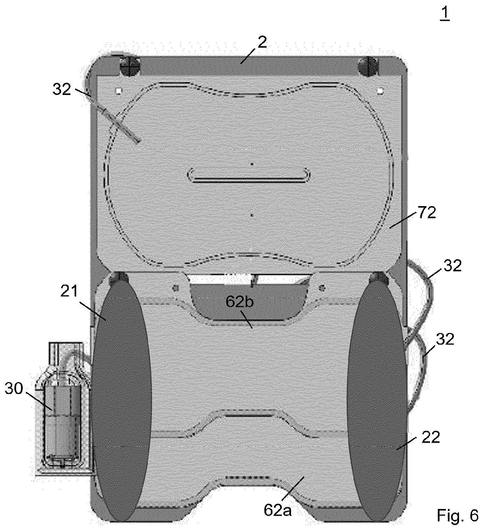

Fig. 6 shows an embodiment of the dynamic pneumatic support system 1 mounted to a mounting board 2. Thereby, the mounting board 2 can be any plastic and/or metal and/or fiber material plate or can be a suspension mat to be readily integrated into a vehicle seat 10. When the dynamic pneumatic support system 1 is mounted to such a mounting board 2 the arrangement of its components is already fixed and installation of the dynamic pneumatic support system 1 into a vehicle seat 10 is facilitated. In this embodiment the lumbar support 60 comprises only two separate bladders 62a, 62b each of which is individually connected to a pump unit 30 via separate channels 32. Thereby, air can be filled individually into each of the bladders 62a, 62b or can individually be released from them according to a desired cushioning. Likewise, bladder 72 of the dorsal support 70 is connected to the pump unit 30 via a third separate channel 32. And the bladders 21, 22 of the side support 20 are mounted and connected to the pump unit 30 via individual channels 32 as well.

The pump unit 30 may preferably be a pump-valve unit having solenoid valves included, which control the airflow into and out of the respective bladder 21, 22, 62, 72. In this embodiment, the pump unit 30 comprises an electrically driven air pump, pressure sensors, 3/3 valves for guiding the air into and out of the desired bladder, a printed circuit board, a housing and an air distributor. Furthermore, the pump unit 30 is electrically coupled to the electronic control unit 40 and receives power and control signals. An overall power supply for the dynamic pneumatic support system 1 may be provided by a battery of the vehicle 100. The sensor unit 50 may be mounted to the mounting board 2 as well. In a preferred embodiment the electronic control unit 40, the sensor unit 50 and the pump unit 30 are integrated into a common unit. In another embodiment the electrically driven air pump is separate from a valve unit, wherein the valve unit, the electronic control unit 40 and the sensor unit 50 are integrated into a common unit.

### List of reference signs

- 1: dynamic pneumatic support system
- 2: mounting board
- 10: vehicle seat
- 12: back rest
- 14a, 14b: lateral sides of the back rest
- 16: seating area
- 20: side support
- 21: right side support bladder
- 21: left side support bladder
- 30: pump unit
- 32: channel
- 40: electronic control unit
- 50: sensor unit
- 60: lumbar support
- 62a, 62b, 62c: lumbar support bladders
- 70: dorsal support
- 72: dorsal support bladder
- 80: control panel
- 82: button for dorsal support
- 84: button for lumbar support
- 86: self-adjust button
- 88: button for right and left side support
- 100: car
- A: acceleration
- D: direction of motion
- G: gravity
- R: resulting force
- P1: driving position
- P2: first relaxing position
- P3: second relaxing position
- V: vertical direction
- α1 - α3: back rest inclination angle

## Claims

1. Dynamic pneumatic support system (1) for integration into a back rest (12) of a vehicle seat (10), the dynamic pneumatic support system (1) comprising:
a. at least one lumbar support bladder (62), arranged at a lumbar region of a back rest (12);
b. at least one dorsal support bladder (72), arranged at least at a shoulder region of the back rest (12);
c. a pump unit (30) for supplying the lumbar support bladder (62) and the dorsal support bladder (72) individually with air;
d. an electronic control unit (40) for controlling the pump unit (30); and
e. a sensor unit (50) connected to the electronic control unit (40) for automatically measuring orientation and/or acceleration (A) of the back rest (12) and providing orientation and/or acceleration data to the electronic control unit (40); wherein
f. the electronic control unit (40) can, based on the orientation and/or acceleration data, control the pump unit (30), for automatically and individually controlling the pressure of at least the lumbar support bladder (62) and dorsal support bladder (72).

2. Dynamic pneumatic support system according to claim 1, wherein the electronic control unit (40) dynamically controls the pressure of the at least one lumbar support bladder (62) and of the at least one dorsal support bladder (72), in a way that when the inclination of the back rest (12) with respect to a vertical direction (V) increases:
a. the pressure of the lumbar support bladder (62) decreases to a predetermined lumbar inclination pressure value or is maintained at a manually set pressure below this predetermined lumbar inclination pressure value; and / or
b. the pressure of the dorsal support bladder (72) increases to a predetermined dorsal inclination pressure value or is maintained at a manually set pressure above this predetermined dorsal inclination pressure value.

3. Dynamic pneumatic support system according to one of the claims 1 or 2, wherein the electronic control unit (40) dynamically controls the pressure of the at least one lumbar support bladder (62) and of the at least one dorsal support bladder (72), in a way that when the inclination of the back rest (12) with respect to a vertical direction (V) decreases:
a. the pressure of the lumbar support bladder (62) increases to a stored manually set pressure above a predetermined lumbar inclination pressure value or is maintained at a manually set pressure below this predetermined lumbar inclination pressure value; and / or
b. the pressure of the dorsal support bladder (72) decreases to a stored manually set pressure above a predetermined dorsal inclination pressure value or is maintained at a manually set pressure above this predetermined dorsal inclination pressure value.

4. Dynamic pneumatic support system according to one of the claims 1 to 3, wherein the electronic control unit (40) is programmed such that, when the inclination angle (α) of the back rest (12) increases
a. the predetermined lumbar inclination pressure value decreases; and / or
b. the predetermined dorsal inclination pressure value increases.

5. Dynamic pneumatic support system according to claim 4, wherein the predetermined lumbar inclination pressure value is about 40% to 85% of the manually set pressure value, preferably, the predetermined lumbar inclination pressure value is about 65% to 85% of the manually set pressure value at an back rest (12) inclination angle (α) of about 45°, and further preferably the predetermined lumbar inclination pressure value is about 40% to 60% of the manually set pressure value at an back rest (12) inclination angle (α) of about 70°.

6. Dynamic pneumatic support system according to one of the claims 4 or 5, wherein the predetermined dorsal inclination pressure value is about 50% to 75% of the maximum dorsal pressure value, preferably, the predetermined dorsal inclination pressure value is about 50% of the maximum dorsal pressure value at an back rest (12) inclination angle (α) of about 45°, and further preferably the predetermined dorsal inclination pressure value is about 75% of the maximum dorsal pressure value at an back rest (12) inclination angle (α) of about 70°.

7. Dynamic pneumatic support system according to one of the claims 1 to 6, wherein the dynamic pneumatic support system (1) comprises two or three lumbar support bladders (62a, 62b, 62c), the pressures of which are individually controlled by the electronic control unit (40).

8. Dynamic pneumatic support system according to one of the claims 1 to 7, wherein the dynamic pneumatic support system (1) further comprising:
a. at least one right side support bladder (21), arranged at the right side of the back rest (12); and
b. at least one left side support bladder (22), arranged at the left side of the back rest (12); wherein
c. the left and right side support bladders (21, 22) are individually in fluid connection with the pump unit (30), for supplying the right side support bladder (21) and the left side support bladder (22) individually with air; and
d. the electronic control unit (40) can, based on the orientation and/or acceleration data, control the pump unit (30), for automatically and individually controlling the pressure of at least the right side support bladder (21) and the left side support bladder (22).

9. Dynamic pneumatic support system (1) for integration into a back rest (12) of a vehicle seat (10), the dynamic pneumatic support system (1) comprising:
a. at least one right side support bladder (21), arranged at the right side of a back rest (12) and at least one left side support bladder (22), arranged at the left side of the back rest (12);
b. the left and right side support bladders (21, 22) are individually in fluid connection with a pump unit (30), for supplying the right side support bladder (21) and the left side support bladder (22) individually with air;
c. an electronic control unit (40) for controlling the pump unit (30); and
d. a sensor unit (50) connected to the electronic control unit (40) for automatically measuring orientation of the dynamic pneumatic support system (1) and/or acceleration (A) and providing orientation and/or acceleration data to the electronic control unit (40); wherein
e. the electronic control unit (40) can, based on the orientation and/or acceleration data, control the pump unit (30), for automatically and individually controlling the pressure of at least the right side support bladder (21) and the left side support bladder (22).

10. Dynamic pneumatic support system according to one of the claims 1 to 9, wherein the electronic control unit (40) comprises two adjustment modes, wherein in a first manual adjustment mode the pressure of the bladders (21, 22, 62, 72) can be manually adjusted by the user, and wherein in a second automatic adjustment mode the pressure of the bladders (21, 22, 62, 72) is automatically adjusted by the electronic control unit (40).

11. Dynamic pneumatic support system according to one of the claims 1 to 10, wherein, the electronic control unit (40) based on the measured orientation data and/or acceleration data, controls the pump unit (30) for automatically controlling the pressure of the bladders (21, 22, 62, 72) for counteracting the acceleration (A) and/or the gravity (G).

12. Method of self-adjusting a dynamic pneumatic support system (1) for integration into a back rest (12) of a vehicle seat (10), the method comprising the following steps:
a. Providing at least one lumbar support bladder (62), arranged at the lumbar region of the back rest (12), at least one dorsal support bladder (72), arranged at least at the shoulder region back rest (12) and a pump unit (30) for supplying the lumbar support bladder (62) and the dorsal support bladder (72) individually with air;
b. Measuring orientation data of the back rest (12) and/or acceleration data by means of a sensor unit (50) and providing said orientation and/or acceleration data to an electronic control unit (40);
c. Automatically controlling the pump unit (30) by the electronic control unit (40) based on the orientation data and/or acceleration data; and
d. Automatically controlling the pressure of the at least one lumbar support bladder (62) and the at least one dorsal support bladder (72) by the pump unit (30) according to the measured orientation and/or acceleration data.

13. Method of self-adjusting a dynamic pneumatic support system (1) according to claim 12, further comprising the following steps:
a. Providing at least one right side support bladder (21), arranged at the right side of the back rest (12) and at least one left side support bladder (22), arranged at the left side of the back rest (12), wherein the left and right side support bladders (21, 22) are individually in fluid connection with the pump unit (30), for supplying the right side support bladder (21) and the left side support bladder (22) individually with air; and
b. Automatically controlling the pressure of the at least one right side support bladder (21) and the at least one left side support bladder (22) by the pump unit (30) according to the measured orientation and/or acceleration data.

14. Method of self-adjusting a dynamic pneumatic support system (1) according to one of the claims 12 or 13, wherein, the automatic controlling step comprises the steps of increasing the pressure in one of the bladders (21, 22, 62, 72) and at the same time decreasing the pressure of the corresponding other bladder (21, 22, 62, 72).

15. Vehicle seat (10) comprising
a. a back rest (12); and
b. a dynamic pneumatic support system (1) according to one of claims 1 to 11 integrated into the back rest (12).

## Patentansprüche

1. Dynamisches pneumatisches Stützsystem (1) zur Integration in eine Rückenlehne (12) eines Fahrzeugsitzes (10), wobei das dynamische pneumatische Stützsystem (1) umfasst:
a. mindestens eine Lordosenstützblase (62), die in einem Lordosenbereich einer Rückenlehne (12) angeordnet ist;
b. mindestens eine dorsale Stützblase (72), die mindestens an einem Schulterbereich der Rückenlehne (12) angeordnet ist;
c. eine Pumpeneinheit (30) zur individuellen Versorgung der Lordosenstützblase (62) und der dorsalen Stützblase (72) mit Luft;
d. eine elektronische Steuereinheit (40) zur Steuerung der Pumpeneinheit (30); und
e. eine Sensoreinheit (50), die mit der elektronischen Steuereinheit (40) verbunden ist, um automatisch die Orientierung und/oder Beschleunigung (A) der Rückenlehne (12) zu messen und Orientierungsund/oder Beschleunigungsdaten an die elektronische Steuereinheit (40) zu liefern; wobei
f. die elektronische Steuereinheit (40), basierend auf den Orientierungsund/oder Beschleunigungsdaten, die Pumpeneinheit (30) steuern kann, um den Druck zumindest der Lordosenstützblase (62) und der dorsalen Stützblase (72) automatisch und individuell zu steuern.

2. Dynamisches pneumatisches Stützsystem nach Anspruch 1, wobei die elektronische Steuereinheit (40) den Druck der mindestens einen Lordosenstützblase (62) und der mindestens einen dorsalen Stützblase (72) dynamisch so steuert, dass wenn die Neigung der Rückenlehne (12) gegenüber einer vertikalen Richtung (V) ansteigt:
a. der Druck der Lordosenstützblase (62) auf einen vorbestimmten Lordosenneigungsdruckwert abfällt oder auf einem manuell eingestellten Druck unterhalb dieses vorbestimmten Lordosenneigungsdruckwertes gehalten wird; und/oder
b. der Druck der dorsalen Stützblase (72) auf einen vorgegebenen dorsalen Neigungsdruckwert ansteigt oder auf einem manuell eingestellten Druck oberhalb dieses vorgegebenen dorsalen Neigungsdruckwertes gehalten wird.

3. Dynamisches pneumatisches Stützsystem nach einem der Ansprüche 1 oder 2, wobei die elektronische Steuereinheit (40) den Druck der mindestens einen Lordosenstützblase (62) und der mindestens einen dorsalen Stützblase (72) dynamisch so steuert, dass wenn die Neigung der Rückenlehne (12) gegenüber einer vertikalen Richtung (V) abnimmt:
a. der Druck der Lordosenstützblase (62) auf einen gespeicherten, manuell eingestellten Druck oberhalb eines vorbestimmten Lordosenneigungsdruckwertes ansteigt oder auf einem manuell eingestellten Druck unterhalb dieses vorbestimmten Lordosenneigungsdruckwertes gehalten wird; und/oder
b. der Druck der dorsalen Stützblase (72) auf einen gespeicherten, manuell eingestellten Druck oberhalb eines vorgegebenen dorsalen Neigungsdruckwertes abfällt oder auf einem manuell eingestellten Druck oberhalb dieses vorgegebenen dorsalen Neigungsdruckwertes gehalten wird.

4. Dynamisches pneumatisches Stützsystem nach einem der Ansprüche 1 bis 3, wobei die elektronische Steuereinheit (40) so programmiert ist, dass wenn der Neigungswinkel (a) der Rückenlehne (12) ansteigt,
a. der vorgegebene Lordosenneigungsdruckwert abnimmt; und/oder
b. der vorgegebene Wert für den dorsalen Neigungsdruck ansteigt.

5. Dynamisches pneumatisches Stützsystem nach Anspruch 4, wobei der vorbestimmte Lordosenneigungsdruckwert etwa 40% bis 85% des manuell eingestellten Druckwertes beträgt, vorzugsweise beträgt der vorbestimmte Lordosenneigungsdruckwert etwa 65% bis 85% des manuell eingestellten Druckwertes bei einem Neigungswinkel (a) der Rückenlehne (12) von etwa 45°, und weiter vorzugsweise beträgt der vorbestimmte Lordosenneigungsdruckwert etwa 40% bis 60% des manuell eingestellten Druckwertes bei einem Neigungswinkel (a) der Rückenlehne (12) von etwa 70°.

6. Dynamisches pneumatisches Stützsystem nach einem der Ansprüche 4 oder 5, wobei der vorbestimmte dorsale Neigungsdruckwert etwa 50 % bis 75 % des maximalen dorsalen Druckwertes beträgt, vorzugsweise beträgt der vorbestimmte dorsale Neigungsdruckwert etwa 50 % des maximalen dorsalen Druckwertes bei einem Neigungswinkel (a) der Rückenlehne (12) von etwa 45°, und weiter vorzugsweise beträgt der vorbestimmte dorsale Neigungsdruckwert etwa 75 % des maximalen dorsalen Druckwertes bei einem Neigungswinkel (a) der Rückenlehne (12) von etwa 70°.

7. Dynamisches pneumatisches Stützsystem nach einem der Ansprüche 1 bis 6, wobei das dynamisch-pneumatische Stützsystem (1) zwei oder drei Lordosenstützblasen (62a, 62b, 62c) umfasst, deren Drücke von der elektronischen Steuereinheit (40) individuell gesteuert werden.

8. Dynamisches pneumatisches Stützsystem nach einem der Ansprüche 1 bis 7, wobei das dynamische pneumatische Stützsystem (1) weiterhin umfasst:
a. mindestens eine rechte Seitenstützblase (21), die an der rechten Seite der Rückenlehne (12) angeordnet ist; und
b. mindestens eine linke Seitenstützblase (22), die an der linken Seite der Rückenlehne (12) angeordnet ist; wobei
c. die linke und rechte Seitenstützblase (21, 22) individuell in Fluidverbindung mit der Pumpeneinheit (30) stehen, um die rechte Seitenstützblase (21) und die linke Seitenstützblase (22) individuell mit Luft zu versorgen; und
d. die elektronische Steuereinheit (40) kann, basierend auf den Orientierungs- und/oder Beschleunigungsdaten, die Pumpeneinheit (30) steuern, um den Druck zumindest der rechten Seitenstützblase (21) und der linken Seitenstützblase (22) automatisch und individuell zu steuern.

9. Dynamisches pneumatisches Stützsystem (1) zur Integration in eine Rückenlehne (12) eines Fahrzeugsitzes (10), wobei das dynamische pneumatische Stützsystem (1) umfasst:
a. mindestens eine rechte Seitenstützblase (21), die an der rechten Seite einer Rückenlehne (12) angeordnet ist und mindestens eine linke Seitenstützblase (22), die an der linken Seite der Rückenlehne (12) angeordnet ist;
b. die linke und rechte Seitenstützblasen (21, 22) individuell in Fluidverbindung mit einer Pumpeneinheit (30) stehen, um die rechte Seitenstützblase (21) und die linke Seitenstützblase (22) individuell mit Luft zu versorgen;
c. eine elektronische Steuereinheit (40), zur Steuerung der Pumpeneinheit (30); und
d. eine Sensoreinheit (50), die mit der elektronischen Steuereinheit (40) verbunden ist, um automatisch die Orientierung des dynamischen pneumatischen Stützsystems (1) und/oder die Beschleunigung (A) zu messen und Orientierungs- und/oder Beschleunigungsdaten an die elektronische Steuereinheit (40) zu liefern; wobei
e. die elektronische Steuereinheit (40), basierend auf den Orientierungsund/oder Beschleunigungsdaten, die Pumpeneinheit (30) steuern kann, um den Druck zumindest der rechten Seitenstützblase (21) und der linken Seitenstützblase (22) automatisch und individuell zu steuern.

10. Dynamisches pneumatisches Stützsystem nach einem der Ansprüche 1 bis 9, wobei die elektronische Steuereinheit (40) zwei Einstellmodi aufweist, wobei in einem ersten manuellen Einstellmodus der Druck der Blasen (21, 22, 62, 72) durch den Benutzer manuell eingestellt werden kann, und wobei in einem zweiten automatischen Einstellmodus der Druck der Blasen (21, 22, 62, 72) automatisch durch die elektronische Steuereinheit (40) eingestellt wird.

11. Dynamisches pneumatisches Stützsystem nach einem der Ansprüche 1 bis 10, wobei die elektronische Steuereinheit (40) auf der Grundlage der gemessenen Orientierungsdaten und/oder Beschleunigungsdaten die Pumpeneinheit (30) zur automatischen Steuerung des Drucks der Blasen (21, 22, 62, 72) steuert, um der Beschleunigung (A) und/oder der Schwerkraft (G) entgegenzuwirken.

12. Verfahren zur Selbsteinstellung eines dynamischen pneumatischen Stützsystems (1) zur Integration in eine Rückenlehne (12) eines Fahrzeugsitzes (10), wobei das Verfahren die folgenden Schritte aufweist:
a. Vorsehen von mindestens einer im Lordosenbereich der Rückenlehne (12) angeordneten Lordosenstützblase (62), mindestens einer mindestens im Schulterbereich der Rückenlehne (12) angeordneten dorsalen Stützblase (72) und einer Pumpeneinheit (30) zur individuellen Versorgung der Lordosenstützblase (62) und der dorsalen Stützblase (72) mit Luft;
b. Messen von Orientierungsdaten der Rückenlehne (12) und/oder Beschleunigungsdaten mittels einer Sensoreinheit (50) und Bereitstellen der Orientierungs- und/oder Beschleunigungsdaten an eine elektronische Steuereinheit (40);
c. Automatisches Steuern der Pumpeneinheit (30) durch die elektronische Steuereinheit (40) basierend auf den Orientierungsdaten und/oder den Beschleunigungsdaten; und
d. Automatisches Steuern des Drucks der mindestens einen Lordosenstützblase (62) und der mindestens einen dorsalen Stützblase (72) durch die Pumpeneinheit (30) entsprechend den gemessenen Orientierungs- und/oder Beschleunigungsdaten.

13. Verfahren zur Selbsteinstellung eines dynamischen pneumatischen Stützsystems (1) nach Anspruch 12, weiterhin aufweisend die folgenden Schritte:
a. Vorsehen mindestens einer rechten Seitenstützblase (21), die an der rechten Seite der Rückenlehne (12) angeordnet ist, und mindestens einer linken Seitenstützblase (22), die an der linken Seite der Rückenlehne (12) angeordnet ist, wobei die linke und die rechte Seitenstützblasen (21, 22) individuell in Fluidverbindung mit der Pumpeneinheit (30) stehen, um die rechte Seitenstützblase (21) und die linke Seitenstützblase (22) individuell mit Luft zu versorgen; und
b. Automatisches Steuern des Drucks der mindestens einen rechten Seitenstützblase (21) und der mindestens einen linken Seitenstützblase (22) durch die Pumpeneinheit (30) entsprechend den gemessenen Orientierungs- und/oder Beschleunigungsdaten.

14. Verfahren zur Selbsteinstellung eines dynamischen pneumatischen Stützsystems (1) nach einem der Ansprüche 12 oder 13, wobei der Schritt der automatischen Steuerung die Schritte der Erhöhung des Drucks in einer der Blasen (21, 22, 62, 72) und der gleichzeitigen Verringerung des Drucks der entsprechenden anderen Blase (21, 22, 62, 72) umfasst.

15. Fahrzeugsitz (10) aufweisend:
a. eine Rückenlehne (12); und
b. ein in die Rückenlehne (12) integriertes dynamisches pneumatisches Stützsystem (1) nach einem der Ansprüche 1 bis 11.

## Revendications

1. Système support pneumatique dynamique (1) destiné à être intégré dans un dossier (12) d'un siège de véhicule (10), le système support pneumatique dynamique (1) comprenant :
a. au moins une poche support lombaire (62), agencée au niveau d'une région lombaire d'un dossier (12) ;
b. au moins une poche support dorsale (72), agencée au moins au niveau d'une région des épaules du dossier (12) ;
c. une unité de pompage (30) pour délivrer individuellement de l'air à la poche support lombaire (62) et à la poche support dorsale (72) ;
d. une unité de contrôle électronique (40) pour contrôler l'unité de pompage (30) ; et
e. une unité de capteur (50) connectée à l'unité de contrôle électronique (40) pour mesurer automatiquement l'orientation et/ou l'accélération (A) du dossier (12) et délivrer des données d'orientation et/ou d'accélération à l'unité de contrôle électronique (40), dans lequel
f. l'unité de contrôle électronique (40) peut, sur la base des données d'orientation et/ou d'accélération, contrôler l'unité de pompage (30) pour contrôler automatiquement et individuellement la pression d'au moins la poche support lombaire (62) et de la poche support dorsale (72).

2. Système support pneumatique dynamique selon la revendication 1, dans lequel l'unité de contrôle électronique (40) contrôle dynamiquement la pression de l'au moins une poche support lombaire (62) et de l'au moins une poche support dorsale (72), d'une manière telle que, lorsque l'inclinaison du dossier (12) par rapport à une direction verticale (V) augmente :
a. la pression de la poche support lombaire (62) diminue jusqu'à une valeur de pression d'inclinaison lombaire prédéterminée, ou est maintenue à une pression réglée manuellement au-dessous de cette valeur de pression d'inclinaison lombaire prédéterminée ; et/ou
b. la pression de la poche support lombaire (72) augmente jusqu'à une valeur de pression d'inclinaison dorsale prédéterminée, ou est maintenue à une pression réglée manuellement au-dessus de cette valeur de pression d'inclinaison dorsale prédéterminée.

3. Système support pneumatique dynamique selon l'une des revendications 1 ou 2, dans lequel l'unité de contrôle électronique (40) contrôle dynamiquement la pression de l'au moins une poche support lombaire (62) et de l'au moins une poche support dorsale (72) d'une manière telle que, lorsque l'inclinaison du dossier (12) par rapport à une direction verticale (V) diminue :
a. la pression de la poche support lombaire (62) augmente jusqu'à une pression mémorisée réglée manuellement au-dessus d'une valeur de pression d'inclinaison lombaire prédéterminée, ou est maintenue à une pression réglée manuellement au-dessous de cette valeur de pression d'inclinaison lombaire prédéterminée ; et/ou
b. la pression de la poche support dorsale (72) diminue jusqu'à une pression mémorisée réglée manuellement au-dessus d'une valeur de pression d'inclinaison dorsale prédéterminée, ou est maintenue à une pression réglée manuellement au-dessus de cette valeur de pression d'inclinaison dorsale prédéterminée.

4. Système support pneumatique dynamique selon l'une des revendications 1 à 3, dans lequel l'unité de contrôle électronique (40) est programmée de telle manière que, lorsque l'angle d'inclinaison (a) du dossier (12) augmente :
a. la valeur de pression d'inclinaison lombaire prédéterminée diminue ; et/ou
b. la pression d'inclinaison dorsale prédéterminée augmente.

5. Système support pneumatique dynamique selon la revendication 4, dans lequel la valeur de pression d'inclinaison lombaire prédéterminée est d'environ 40 % à 85 % de la valeur de pression réglée manuellement, la valeur de pression d'inclinaison lombaire prédéterminée est de préférence d'environ 65 % à 85 % de la valeur de pression réglée manuellement pour un angle d'inclinaison (α) du dossier (12) d'environ 45°, et la valeur de pression d'inclinaison lombaire prédéterminée est en outre de préférence d'environ 40 % à 60 % de la valeur de pression réglée manuellement pour un angle d'inclinaison (α) du dossier (12) d'environ 70°.

6. Système support pneumatique dynamique selon l'une des revendications 4 ou 5, dans lequel la valeur de pression d'inclinaison dorsale prédéterminée est d'environ 50 % à 75 % de la valeur de pression dorsale maximale, la valeur de pression d'inclinaison dorsale prédéterminée est de préférence d'environ 50 % de la valeur de pression dorsale maximale pour un angle d'inclinaison (α) du dossier (12) d'environ 45°, et la valeur de pression d'inclinaison dorsale prédéterminée est de préférence en outre d'environ 75 % de la valeur de pression dorsale maximale pour un angle d'inclinaison (α) du dossier (12) d'environ 70°.

7. Système support pneumatique dynamique selon l'une des revendications 1 à 6, dans lequel le système support pneumatique dynamique (1) comprend deux ou trois poches support lombaires (62a, 62b, 62c) dont les pressions sont contrôlées individuellement par l'unité de contrôle électronique (40).

8. Système support pneumatique dynamique selon l'une des revendications 1 à 7, dans lequel le système support pneumatique dynamique (1) comprend en outre :
a. au moins une poche support de côté droit (21), agencée au niveau du côté droit du dossier (12) ; et
b. au moins une poche support de côté gauche (22), agencée au niveau du côté gauche du dossier (12) ; dans lequel
c. les poches support de côté gauche et de côté droit (21, 22) sont individuellement en liaison fluidique avec l'unité de pompage (30), pour délivrer individuellement de l'air à la poche support de côté droit (21) et à la poche support de côté gauche (22); et
d. l'unité de contrôle électronique (40) peut, sur la base des données d'orientation et/ou d'accélération, contrôler l'unité de pompage (30) pour contrôler automatiquement et individuellement la pression d'au moins la poche support de côté droit (21) et de la poche support de côté gauche (22).

9. Système support pneumatique dynamique (1) destiné à être intégré dans un dossier (12) d'un siège de véhicule (10), le système support pneumatique dynamique (1) comprenant :
a. au moins une poche support de côté droit (21), agencée au niveau du côté droit d'un dossier (12) et au moins une poche support de côté gauche (22) agencée au niveau du côté gauche du dossier (12) ;
b. les poches support de côté gauche et de côté droit (21, 22) sont individuellement en liaison fluidique avec l'unité de pompage (30), pour délivrer individuellement de l'air à la poche support de côté droit (21) et à la poche support de côté gauche (22) ;
c. une unité de contrôle électronique (40) pour contrôler l'unité de pompage (30) ; et
d. une unité de capteur (50) reliée à l'unité de contrôle électronique (40) pour mesurer automatiquement l'orientation du système support pneumatique dynamique (1) et/ou l'accélération (A) et délivrer à l'unité de contrôle électronique (40) des données d'orientation et/ou d'accélération ; dans lequel
e. l'unité de contrôle électronique (40) peut, sur la base des données d'orientation et/ou d'accélération, contrôler l'unité de pompage (30) pour contrôler automatiquement et individuellement la pression d'au moins la poche support de côté droit (21) et de la poche support de côté gauche (22).

10. Système support pneumatique dynamique selon l'une des revendications 1 à 9, dans lequel l'unité de contrôle électronique (40) comprend deux modes d'ajustement, dans lequel, dans un premier mode d'ajustement manuel, la pression des poches (21, 22, 62, 72) peut être ajustée manuellement par l'utilisateur et dans lequel, dans un second mode d'ajustement automatique, la pression des poches (21, 22, 62, 72) est ajustée automatiquement par l'unité de contrôle électronique (40).

11. Système support pneumatique selon l'une des revendications 1 à 10, dans lequel l'unité de contrôle électronique (40), sur la base des données d'orientation et/ou des données d'accélération mesurées, contrôle l'unité de pompage (30) pour contrôler automatiquement la pression des poches (21, 22, 62, 72) pour compenser l'action de l'accélération (A) et/ou de la gravité (G).

12. Procédé d'auto-ajustement d'un système support pneumatique dynamique (1) destiné à être intégré dans un dossier (12) d'un siège de véhicule (10), le procédé comprenant les étapes suivantes :
a. obtention d'au moins une poche support lombaire (62) agencée au niveau de la région lombaire du dossier (12), d'au moins une poche support dorsale (72) agencée au moins au niveau de la région des épaules du dossier (12), et d'une unité de pompage (30) destinée à délivrer individuellement de l'air à la poche support lombaire (62) et à la poche support dorsale (72) ;
b. mesure de données d'orientation du dossier (12) et/ou de données d'accélération au moyen d'une unité de capteur (50), et délivrance à une unité de contrôle électronique (40) desdites données d'orientation et/ou d'accélération ;
c. contrôle automatique de l'unité de pompage (30) par l'unité de contrôle électronique (40) sur la base des données d'orientation et/ou des données d'accélération ; et
d. contrôle automatique de la pression de l'au moins une poche support lombaire (62) et de l'au moins une poche support dorsale (72) par l'unité de pompage (30) en fonction des données d'orientation et/ou d'accélération mesurées.

13. Procédé d'auto-ajustement d'un système support pneumatique dynamique (1) selon la revendication 12, comprenant en outre les étapes suivantes :
a. obtention d'au moins une poche support de côté droit (21) agencée au niveau du côté droit du dossier (12), et d'au moins une poche support de côté gauche (22) agencée au niveau du côté gauche du dossier (12), les poches support de côté gauche et de côté droit (21, 22) étant individuellement en connexion fluidique avec l'unité de pompage (30), pour délivrer individuellement de l'air à la poche support de côté droit (21) et à la poche support de côté gauche (22) ; et
b. contrôle automatique de la pression de l'au moins une poche support de côté droit (21) et de l'au moins une poche support de côté gauche (22) par l'unité de pompage (30) de l'autre poche correspondante (21, 22, 62, 72).

14. Procédé d'auto-ajustement d'un système support pneumatique dynamique (1) selon l'une des revendications 12 ou 13, dans lequel l'étape de contrôle automatique comprend les étapes d'augmentation de la pression dans l'une des poches (21, 22, 62, 72) et en même temps de diminution de la pression dans l'autre poche correspondante (21, 22, 62, 72).

15. Siège de véhicule (10) comprenant :
a. un dossier (12) ; et
b. un système support pneumatique dynamique (1) selon l'une des revendications 1 à 11, intégré dans le dossier (12).
